# EUROPEAN PATENT APPLICATION

(11) **EP 4 838 749 A1**
(43) Date of publication of application: **11.11.2026**
(21) Application number: 25822413.8
(22) Date of filing: 29.05.2025
(51) Int. Cl.: H02J 7/00, H04R 1/10

(54) **TRANSMISSION LINE STRUCTURE OF CHARGING CRADLE AND EARBUD**

(30) Priority: 10.06.2024 KR 20240075320; 11.07.2024 KR 20240092005
(71) Applicant: Samsung Electronics Co., Ltd., Suwon-si, Gyeonggi-do 16677 (KR)
(72) Inventor: CHOI, Kyusik, Suwon-si, Gyeonggi-do 16677 (KR); BYUN, Kangho, Suwon-si, Gyeonggi-do 16677 (KR); KIM, Sungjin, Suwon-si, Gyeonggi-do 16677 (KR); SHIN, Jaesun, Suwon-si, Gyeonggi-do 16677 (KR); JEONG, Cheol, Suwon-si, Gyeonggi-do 16677 (KR)
(74) Representative: Gulde & Partner
(86) International application number: PCT/KR2025/007349
(87) International publication number: WO 2025/258895

(57) **Abstract**

An electronic device according to various embodiments of the present document may comprise: a processor; a connection terminal configured to be connected to an external device; a transmission line that is connected to the connection terminal and transmits and receives power or data to and from the external device when the external device is connected; and a recognition circuit that is connected to the transmission line and outputs an electrical signal to the transmission line. The processor may control the recognition circuit to output a first electrical signal to the transmission line in a first time interval. The processor may be configured to: identify a voltage value formed in the transmission line while the first electrical signal is output; and determine whether the external device is connected to the connection terminal, on the basis of the identified first voltage value. Various other embodiments are possible.

## Description

### [Technical Field]

The disclosure relates to a charging cradle and an ear bud, and more particularly to the structure and control of a transmission line between the charging cradle and the ear bud.

### [Background Art]

An ear bud is used as an audio accessory that outputs an audio signal generated by a portable electronic device such as a smartphone and a tablet PC (hereinafter referred to as an electronic device). Two ear buds, each worn on the user's left and right ears, may be configured as one set, and each ear bud may receive an audio signal from an electronic device through short-range wireless communication (e.g., Bluetooth) and output the audio signal. The ear bud may perform an operation such as audio output or wireless communication by using built-in battery power.

A charging cradle may be used as a device for charging a battery of an ear bud. The charging cradle may charge the battery of the ear bud by using an internal battery power or an external power connected thereto by wire/wirelessly. In addition, the charging cradle and the ear bud need to perform data communication with each other to provide an efficient charging function. The charging cradle may not provide a wireless communication function, and thus, power transmission and data communication may be performed through a wired transmission line between the charging cradle and the ear bud.

### [Disclosure of Invention]

### [Technical Problem]

The transmission line between the charging cradle and the ear bud needs to be configured with a minimum number of lines due to size constraints and simple structural design requirements. When configuring a single transmission line between the charging cradle and the ear bud, a method for performing power transmission and multi-channel data communication is required.

### [Solution to Problem]

An electronic device according to the disclosure (or specification, invention) may include a processor 310, a connection terminal 320 configured to be connected to an external device, a transmission line 390 connected to the connection terminal and transmitting and receiving power or data to and from an external device when the external device is connected, and a recognition circuit 340 connected to the transmission line and outputting an electrical signal to the transmission line.

According to an embodiment, the processor may be configured to control the recognition circuit to output a first electrical signal to the transmission line during a first time period, identify a voltage value of a voltage applied to the transmission line while the first electrical signal is output, and determine whether the external device is connected to the connection terminal, based on the identified first voltage value.

In a method performed by an electronic device according to various embodiment of the disclosure, the electronic device may include a connection terminal configured to be connected to an external device, a transmission line connected to the connection terminal and transmitting and receiving power or data to and from an external device when the external device is connected, and a recognition circuit connected to the transmission line and outputting an electrical signal to the transmission line.

According to an embodiment, the method may include outputting a first electrical signal from the recognition circuit to the transmission line during a first time period, identifying a voltage value of a voltage applied to the transmission line while the first electrical signal is output, and determining whether the external device is connected to the connection terminal, based on the identified first voltage value.

### [Advantageous Effects of Invention]

An electronic device according to various embodiments of the disclosure may perform data communication and power transmission with an external device through one transmission line.

### [Brief Description of Drawings]

FIG. 1 illustrates a charging cradle and ear buds according to various embodiments;
FIG. 2 is a circuit diagram of a first electronic device according to an embodiment;
FIG. 3 is a block diagram of an electronic device according to an embodiment;
FIG. 4A is a circuit diagram of a first electronic device according to an embodiment;
FIG. 4B is a circuit diagram of a second electronic device according to an embodiment;
FIG. 5 is a circuit diagram of a first electronic device and a second electronic device according to an embodiment;
FIG. 6 illustrates a transmission path of an electrical signal when a first electronic device and a second electronic device recognize a device according to an embodiment;
FIG. 7 illustrates an electrical signal detected when a second electronic device is inserted into a first electronic device according to an embodiment;
FIG. 8 illustrates a transmission path of an electrical signal when moisture is recognized by a first electronic device according to an embodiment;
FIG. 9 illustrates an electrical signal detected when moisture is inserted into a first electronic device according to an embodiment;
FIG. 10 illustrates a timing of power transmission and data communication according to an embodiment;
FIG. 11 illustrates an operation of a first electronic device according to an electrical signal detected in a state where a second electronic device is not inserted into the first electronic device according to an embodiment;
FIGS. 12A and 12B illustrate the operation of a first electronic device according to an electrical signal detected when a second electronic device is inserted into the first electronic device according to an embodiment; and
FIG. 13 is a flowchart of a method performed by a first electronic device according to an embodiment.

### [Mode for the Invention]

Hereinafter, with reference to the drawings, embodiments of the disclosure will be described in detail so that those skilled in the art may easily implement the disclosure. However, the disclosure may be implemented in various different forms and is not limited to the embodiments described herein. In relation to the description of the drawings, the same or similar reference numerals may be used for the same or similar components. In addition, in the drawings and related descriptions, descriptions of well-known functions and configurations may be omitted for clarity and conciseness.

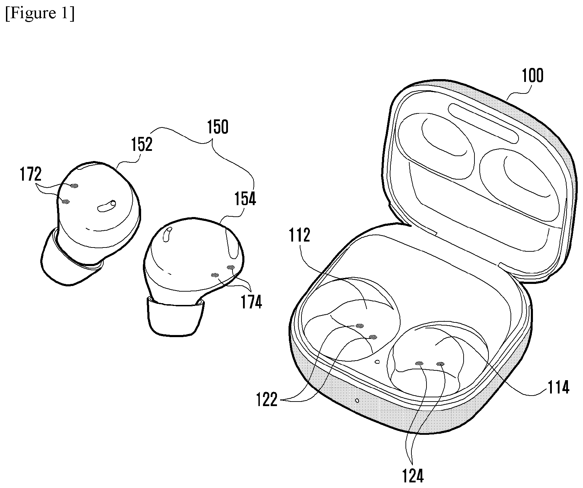

FIG. 1 illustrates a charging cradle and ear buds according to various embodiments.

In the disclosure, the ear bud 150 may be a device worn on the user's ear to output an audio signal, and the charging cradle 100 may be a device for storing the ear bud 150 inside and charging the battery of the ear bud 150. The charging cradle 100 may be referred to by other terms such as a charging case (or dock, station, base), or a power transmission (or supply) device, and the ear bud 150 may also be referred to by other terms such as an earpiece, a wireless earphone, or an in-ear earphone.

According to an embodiment, the ear buds may include a first ear bud 152 that may be worn on the user's left ear and a second ear bud 154 that may be worn on the user's right ear, and the first ear bud 152 and second ear bud 154 may be configured as one set. In the disclosure, when referring to an ear bud, it may be understood to refer to either the first ear bud 152 or the second ear bud 154 of FIG. 1.

According to an embodiment, the ear bud 150 may receive an audio signal from an external device (e.g., a smartphone, a tablet PC, a laptop PC) through short-range wireless communication and output the audio signal. The short-range wireless communication between the ear bud 150 and the external electronic device may be Bluetooth or Wi-Fi direct, but is not limited thereto. The ear bud 150 may include various hardware components (e.g., an antenna, a modem, and a communication circuit) for providing short-range wireless communication. According to an embodiment, one of the two ear buds 152 and 154 (e.g., the first ear bud 152 or the second ear bud 154) operating as a master may be connected to an electronic device through short-range wireless communication, and the master may receive an audio signal from the electronic device and provide the audio signal to the other one operating as a slave.

According to an embodiment, the ear bud 150 may include a battery that stores power to be supplied to each component (e.g., a processor, a memory, a communication circuit, and an audio output circuit) of the ear bud 150. The battery may be a rechargeable battery (e.g., a lithium-ion battery). The ear bud 150 may charge the battery based on power supplied from the charging cradle 100 when inserted into the charging cradle 100.

According to an embodiment, the charging cradle 100 may include a battery. According to an embodiment, when the charging cradle 100 is supplied with an external power by wire or wirelessly while the ear bud 150 is inserted into the charging cradle 100, the battery of the ear bud 150 may be charged through the corresponding power, or when the charging cradle 100 is not connected to the external power source, the battery power of the charging cradle 100 may be supplied for charging the battery of the ear bud.

According to an embodiment, the charging cradle 100 may include a first hole 112 into which the first ear bud 152 may be inserted and a second hole 114 into which the second ear bud 154 may be inserted. According to an embodiment, the first hole 112 is formed to correspond to the outer shape of the first ear bud 152, so that when the first ear bud 152 is inserted into the first hole 112, the first ear bud 152 may be seated at a predetermined position of the first hole 112. In addition, the second hole 114 is formed to correspond to the outer shape of the second ear bud 154, so that when the second ear bud 154 is inserted into the second hole 114, the second ear bud 154 may be seated at a predetermined position of the second hole 114.

According to an embodiment, the charging cradle 100 may include a connection pin (e.g., a first connection pin 122, a second connection pin 124) for electrical connection with the first ear bud 152 and the second ear bud 154, and each of the first ear bud 152 and the second ear bud 154 may include a connection pad (e.g., a first connection pad 172, a second connection pad 174) for electrical connection with the charging cradle 100. For example, the first connection pin 122 of the charging cradle 100 may be disposed within the first hole 112 and may be configured to contact the first connection pad 172 of the first ear bud 152 when the first ear bud 152 is seated in the first hole 112, and the second connection pin 124 of the charging cradle 100 may be configured to contact the second connection pad 174 of the second ear bud 154 when the second ear bud 154 is seated in the second hole 114 to make an electrical connection.

According to an embodiment, the connection pins (e.g., the first connection pin 122 and the second connection pin 124) of the charging cradle 100 and the connection pads (e.g., the first connection pad 172 and the second connection pad 174) of the ear bud 150 may include a contact-type pin structure such as a pogo pin. The pogo pin may physically fix the contact of two pins that are in contact with each other through a vertical spring structure. Accordingly, even when the charging cradle 100 moves, the electrical connection between the charging cradle 100 and the ear bud 150 may be stably maintained.

According to an embodiment, the charging cradle 100 and the ear bud 150 may perform data communication with each other through an electrical path generated by connecting the connection pins (e.g., the first connection pin 122 and the second connection pin 124) of the charging cradle 100 with the connection pads (e.g., the first connection pad 172 and the second connection pad 174) of the ear bud 150. For example, the charging cradle 100 and the ear bud 150 may transmit and receive data related to battery status, charging status, and/or firmware updates, and examples of data communication are not limited thereto.

According to an embodiment, the charging cradle 100 and the ear bud 150 may use multiple channels for data communication. For example, the charging cradle 100 and the ear bud 150 may use a 1.2V channel for transmitting and receiving small amounts of data, such as battery status and charging status, and may use a 1.8V channel for transmitting and receiving high speed and large amounts of data, such as firmware updates.

According to an embodiment, the charging cradle 100 and the ear bud 150 need to minimize the number of transmission lines for miniaturization of the structure or for simple wiring structure, power efficiency, and/or reliability of communication. For example, the charging cradle 100 and the ear bud 150 may be connected with only two lines through the connection pins (e.g., the first connection pin 122 and the second connection pin 124) and the connection pads (e.g., the first connection pad 172 and the second connection pad 174), and one of these lines may be connected to the ground and include only one transmission line (or single wire transmission line) to be used for actual power transmission and data communication.

Hereinafter, various embodiments for implementing multi-channel communication and power transmission by using a single transmission line between a first electronic device (e.g., the charging cradle 100) and a second electronic device (e.g., the ear bud 150) will be described.

In the disclosure, the first electronic device will be described as the charging cradle 100 and the second electronic device will be described as the ear bud 150, but various embodiments of the disclosure are not limited to the charging cradle 100 and the ear bud 150. For example, various embodiments of the disclosure may be applied to electronic devices connected to each other through a connection pin (e.g., a contact pin, a pogo pin) and capable of performing power transmission and data communication between each other.

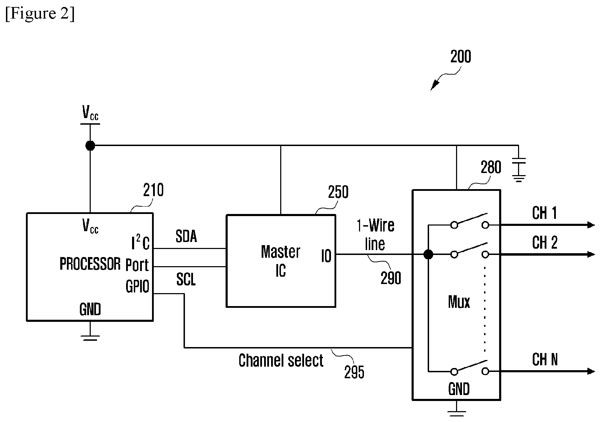

FIG. 2 is a circuit diagram of a first electronic device according to an embodiment.

According to an embodiment, multiple communication channels may be implemented by using one transmission line 290 in a first electronic device 200.

Referring to FIG. 2, the first electronic device 200 may include a processor 210, a master IC 250, and a multiplexer (Mux) 280. The processor 210, the master IC 250, and the Mux 280 may be connected to the input power source Vcc and supplied with a voltage.

According to an embodiment, the master IC 250 may provide protocol conversion between the processor 210 and the slaves connected through each channel. The master IC 250 may transmit and receive data to and from the processor 210 through inter-integrated circuit (I2C) communication. The processor 210 and the master IC 250 may each include a serial data (SDA) port and a serial clock (SCL) port for I2C communication. Although not shown, a pull-up resistor (not shown) may be placed between the SDA line and the SCL line and the input power source Vcc node.

According to an embodiment, the master IC 250 and the Mux 280 may be connected by a single transmission line 290. The input/output (IO) pin of the master IC 250 may be connected to the single transmission line 290, and data of multiple channels may be transmitted and received from the master IC 250 to the Mux 280 through the single transmission line 290. Although not shown, the master IC 250 may transmit an enable signal (or EN signal) of the Mux 280 through a line connected to the general purpose input/output (GPIO) pin.

According to an embodiment, the Mux 280 may be connected to each slave node through multiple channels.

According to an embodiment, the processor 210 may transmit a channel selection signal to the Mux 280 through the channel selection line 295 connected to the Mux 280 from the GPIO pin. For example, the processor 210 may transmit a channel selection signal indicating any one of multiple channels connecting the Mux 280 and slave nodes to the Mux 280 through the channel selection line 295, and Mux 280 may be switched according to the channel selection signal to connect the single transmission line 290 and a specific channel.

According to an embodiment of FIG. 2, multi-channel communication may be implemented with only a single communication line in an environment in which it is difficult to increase the number of communication lines. Accordingly, it is possible to provide advantages in cost and space. However, in the embodiment, data communication is possible with the single transmission line 290, but at least one channel selection line 295 between the processor 210 and the Mux 280 may be required to control the Mux 280 that distributes communication channels. For example, if the Mux 280 is connected to two channels, one transmission line 290 between the master IC 250 and the Mux 280 and one channel selection line between the processor 210 and the Mux 280 are required, and if the Mux 280 is connected to three or more channels, two or more channel selection lines may be required.

When the first electronic device 200 and a second electronic device connected to the first electronic device 200 are configured with a charging cradle (e.g., the charging cradle 100 of FIG. 1) and an ear bud (e.g., the ear bud 150 of FIG. 1), respectively, it is difficult to physically configure the channel selection line 295, so it is difficult to apply a structure like FIG. 2.

According to another embodiment, data communication between the first electronic device 200 and the second electronic device may be implemented as power line communication PLC, thereby providing power transmission and data communication using the single transmission line 290. However, when using power line communication, there may be problems that it is not possible to increase the communication speed because it is vulnerable to noise, and the power transmission efficiency may be poor because the transmission voltage must be increased by the peak to peak of the AC voltage that is shaken for communication, the price increases to configure multiple modulators, and/or the number of signals that may be transmitted and received simultaneously with power transmission is limited to up to two (e.g., voltage modulation, current modulation).

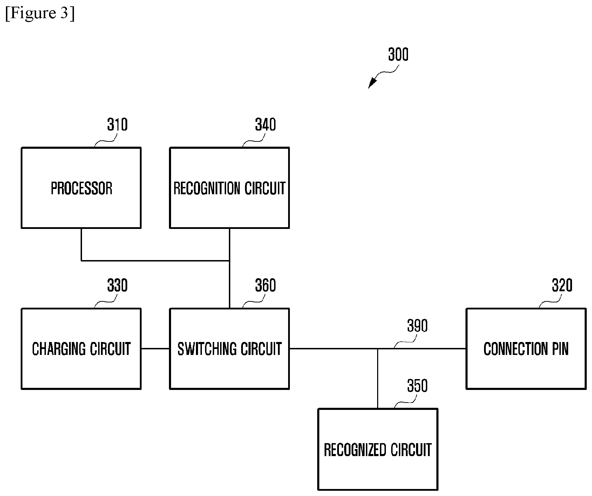

Hereinafter, according to various embodiments described with reference to FIGS. 3 to 13, unlike the embodiment using FIG. 2 or power line communication, a communication channel may be selected without a separate channel selection line (e.g., the channel selection line 295), power transmission and data communication may be implemented in time division, and device connection recognition, moisture recognition, and/or abnormal state recognition functions may also be provided.

FIG. 3 is a block diagram of an electronic device according to an embodiment.

Referring to FIG. 3, an electronic device 300 may include a processor 310, a charging circuit 330, a recognition circuit 340, a switching circuit 360, a recognized circuit 350, and a connection pin 320. The electronic device 300 may be a charging cradle (e.g., the charging cradle 100 of FIG. 1) capable of accommodating an ear bud (e.g., the ear bud 150 of FIG. 1) but is not limited thereto.

According to an embodiment, the connection pin 320 may be a contact point for electrical connection between an external device (e.g., the ear bud 150 of FIG. 1) and the external device. For example, when the external device is inserted into the electronic device 300, the connection pin 320 and the connection pad of the external device may physically contact and be electrically connected. The connection pin 320 may be a pogo pin, but is not limited thereto. The connection pin 320 may include two terminals, one of which may be connected to ground, and the other may be connected to the transmission line 390 used for data communication and power transmission. In the disclosure, the connection pin 320 of the electronic device 300 and the connection pad of the external device (or the second electronic device) may also be referred to as a connection terminal.

According to an embodiment, when an external device is connected to the connection pin 320, the electronic device 300 and the external device may be electrically connected through one transmission line 390. For example, an electrical node connected to the connection pad of the external device through the switching circuit 360 and the connection pin 320 may be included in the transmission line 390.

According to an embodiment, the processor 310 may perform a function of controlling each component of the electronic device 300. For example, the processor 310 may perform various control operations related to recognition of connection of an external device through the connection pin 320, recognition of moisture ingress, power transmission to an external device, and/or data communication. According to an embodiment, the processor 310 may be configured as a microcontroller unit (MCU). The operation of the processor 310 to be described later may be performed by executing instructions stored in the memory (not shown) of the MCU.

According to an embodiment, the charging circuit 330 may perform a function of charging the battery of the electronic device 300 and supplying power to each component of the electronic device 300 by using power input from an external power source. In addition, when an external device is connected to the connection pin 320, the charging circuit 330 may perform a function of transmitting external power or battery power to the external device. According to an embodiment, the charging circuit 330 may include a wired charging circuit and a wireless charging circuit. With respect to charging and power supply operations, the wired charging circuit and/or the wireless charging circuit may operate under the control of the processor 310 or may include a separate control circuit (not shown).

According to an embodiment, the switching circuit 360 may connect the transmission line 390 to the processor 310 or the charging circuit 330 under the control of the processor 310. The switching circuit 360 may include a switch (e.g., a single pole double throw (SPDT) and a multiplexer (MUX). When an external device is connected, the processor 310 may control the charging circuit 330 and the transmission line 390 including the connection pin 320 to be connected in the power transmission period, and control the switching circuit 360 to connect the processor 310 and the transmission line 390 in the data communication period.

According to an embodiment, the recognition circuit 340 may be electrically connected to the transmission line 390, and may be configured to output an electrical signal to the transmission line 390 according to a control signal of the processor 310. For example, when an external device is connected, the processor 310 may control the recognition circuit 340 to include a first impedance characteristic for detection as external device connection recognition in the transmission line 390 in the first time period (or device recognition period), and when moisture ingresses, the processor 310 may control the recognition circuit 340 to include a second impedance characteristic for detection as moisture ingress in the transmission line 390 in the second time period (or moisture recognition period).

According to an embodiment, the recognition circuit 340 may include a variable resistor (or variable impedance). For example, the recognition circuit 340 may include a device recognition circuit for detecting whether an external device is connected and a moisture recognition circuit for detecting whether moisture has entered.

According to an embodiment, the recognition circuit 340 may include two or more resistors connected in series/parallel, and may include a switch (or pull-up switch) for turning on/off some of the resistors. The recognition circuit 340 may include a first resistor (or a device recognition resistor), a pull-up switch capable of turning the first resistor on/off, and a second resistor (or a moisture recognition resistor) connected in parallel with the first resistor and the pull-up switch. The second resistor may have a resistance value sufficiently greater than that of the first resistor. Accordingly, when the pull-up switch is closed, most of the current from the input power source may flow through the first resistor to the transmission line 390, and when the pull-up switch is opened, since the first resistor is in the off state, a current may flow from the input power source through the second resistor to the transmission line 390.

According to an embodiment, the recognition circuit 340 may include a current source capable of outputting a specific current to the transmission line 390 through the switching circuit 360. In this case, the processor 310 may control the current source so that the current of a specific value is output to the transmission line 390 depending on the operation mode.

According to an embodiment, the recognition circuit 340 may include a circuit for detecting a voltage and/or current flowing through the transmission line 390. In another example, the processor may include a detection circuit to detect a voltage and/or current flowing through the transmission line 390. For example, at least one port (e.g., pin, pad) of an IC including a processor circuit may be used to detect a voltage and/or current flowing through the transmission line 390.

According to an embodiment, the recognized circuit 350 may be connected to the transmission line 390 in parallel. The recognized circuit 350 may include two or more resistors connected in series/parallel, and may include a switch (or a pull-down switch) for turning on/off some of the resistors. When the device recognition operation of an external device connected through the connection pin 320 is performed, the processor 310 may control the recognized circuit 350 so that a volgage of a specific voltage value is applied to the transmission line 390.

According to an embodiment, when the external device is connected to the connection pin 320, the recognized circuit 350 may receive power from an external device. Accordingly, even if the battery of the electronic device 300 is discharged, the recognized circuit 350 may be controlled, so that the external device may recognize the connection with the electronic device 300.

According to an embodiment, the processor 310 may perform a device recognition operation and a moisture recognition operation in a state where an external device is not connected to the connection pin 320. The processor 310 may control the recognition circuit 340 to output an electrical signal corresponding to an operation mode (e.g., a device recognition mode or a moisture recognition mode) to the transmission line 390, identify the voltage value of the voltage applied to the transmission line 390 while the electrical signal is output, and identify the state of the connection pin 320 based on whether the identified voltage value corresponds to a specific voltage value.

According to an embodiment, the processor 310 may control the recognition circuit 340 to output a first electrical signal to the transmission line 390 during the first time period. For example, the processor 310 may close (or on) the pull-up switch connected to the first resistor (or device recognition resistor) of the recognition circuit 340, and accordingly, a current by an input power may flow through the device recognition resistor to the transmission path.

According to an embodiment, the processor 310 may identify the voltage value of the voltage applied to the transmission line 390 while the first electrical signal is output to the transmission line 390. When an external device is not connected to the connection pin 320, since the connection pin 320 is in an open state, a voltage drop does not occur, and thus the voltage value of the transmission path may be substantially the same as the voltage value of the input power source. In addition, when an external device is connected to the connection pin 320, a voltage distributed by the recognition circuit 340 of the electronic device 300 and the recognized circuit of the external device may be applied to the transmission line 390.

According to an embodiment, the processor 310 may determine whether an external device is connected to the connection pin 320 based on the identified voltage value. For example, when the identified voltage value is substantially equal to the determined voltage value (e.g., a voltage value Vdd, 1.8 V of the input power source) (or within a certain range), the processor 310 may determine that the external device is not connected.

According to an embodiment, when it is determined that the external device is not connected to the connection pin 320, the processor 310 may perform a moisture recognition operation. According to an embodiment, the processor 310 may control the recognition circuit 340 to output a second electrical signal to the transmission line 390 during the second time period. For example, the processor 310 opens (or turns off) the pull-up switch connected to the first resistor of the recognition circuit 340 during the second time period, so that a current does not flow from the input power source to the first resistor, but may flow through the second resistor to the transmission line 390.

According to an embodiment, the processor 310 may identify the voltage value of the voltage applied to the transmission line 390 and determine whether moisture has been entered the connection pin 320 based on the magnitude of the voltage value. For example, if moisture has not entered, a voltage having a voltage value corresponding to the input power source Vdd may be applied to the transmission line 390, and if moisture has entered, a voltage value lower than the input power source Vdd may be applied. When the measured voltage value of the transmission line 390 is less than or equal to a specific voltage value, the processor 310 may determine that moisture has entered. The second time period in which the processor 310 performs the moisture recognition operation may be before or after the first time period. That is, the order of the device recognition operation and the moisture recognition operation is not fixed, and they may be performed repeatedly when the device recognition and moisture recognition are not performed.

According to an embodiment, when it is identified that an external device is connected to the connection pin 320, the processor 310 may perform data communication and power transmission in a time division manner through the transmission line 390. For example, the processor 310 may be configured to transmit data to the external device through the transmission line 390 during a third time period, receive data transmitted from the external device through the transmission line 390 during a fourth time period, and supply power to the external device through the transmission line 390 from the charging circuit 330 during a fifth time period.

According to an embodiment, the processor 310 may determine a channel to be used for data communication with an external device. For example, the electronic device 300 and the external device may use multiple channels for data communication, and may use a 1.2V channel to transmit and receive small amounts of data, such as battery status and charging status, and a 1.8 V channel to transmit and receive large amounts of data at high speeds, such as firmware updates.

According to an embodiment, the processor 310 may control the recognition circuit 340 to apply a voltage corresponding to the determined channel on the transmission line 390. For example, the processor 310 may control the current value of the current source of the recognition circuit 340 or the resistance value of resistors connected in a serial-parallel structure to a value corresponding to the determined channel. When the external device operates the recognized circuit 350, a voltage having a specific voltage value may be applied to the transmission line 390, and the external device may identify the currently configured channel by identifying the voltage value of the voltage applied to the transmission line 390.

According to an embodiment, the electronic device 300 may include a Mux for switching between multiple communication channels and transmission paths.

According to an embodiment, the electronic device 300 and the external device may perform data communication using a universal synchronous receiver/transmitter (UART) method, but the communication method is not limited thereto.

According to an embodiment, the electronic device 300 may schedule power transmission and data communication through the transmission line 390. For example, the processor 310 may schedule in the following order: data transmission period of the electronic device 300 - switching period - data transmission period of the electronic device 300 - switching period - power transmission period. The electronic device 300 and the external device may sequentially transmit data a predetermined number of times and then transmit power again through the transmission line 390, and the number, time length, and/or packet size of the transmission period of each device may be determined according to the size of data to be transmitted by each device.

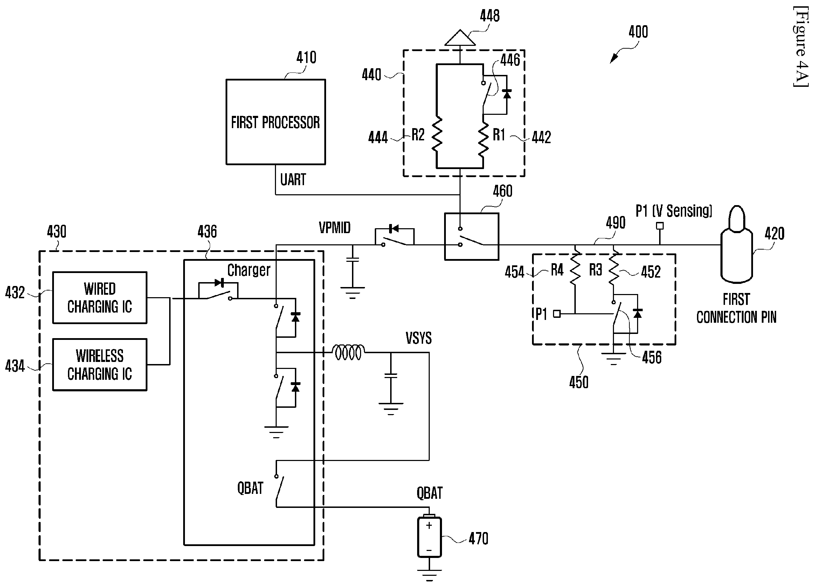

FIG. 4A is a circuit diagram of a first electronic device according to an embodiment.

Referring to FIG. 4A, a first electronic device 400 (e.g., the charging cradle 100 of FIG. 1) may include a first processor 410, a first charging circuit 430, a first battery 470, a first recognition circuit 440, a first recognized circuit 450, a first switching circuit 460, and a first connection pin 420.

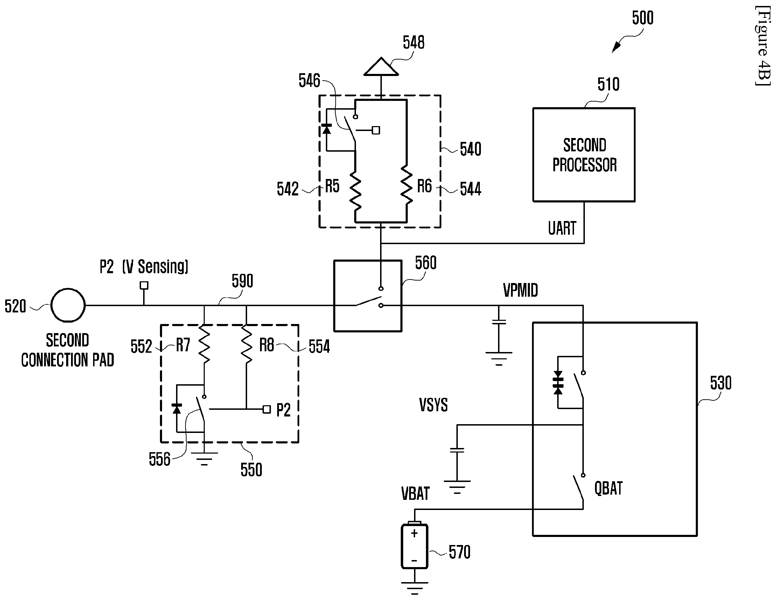

According to an embodiment, the first processor 410 (e.g., the processor 310 of FIG. 3) may perform various control operations related to recognition of a second electronic device 500 (e.g., the ear bud 150 of FIG. 1 and the second electronic device 500 of FIG. 4B) connected through the first connection pin 420 (or the first connection terminal), power transmission to the second electronic device 500, and/or data communication. For example, the first processor 410 may control the first recognition circuit 440 to output an electrical signal corresponding to connection recognition or moisture recognition of the second electronic device 500 during each time period, and measure the voltage value of the transmission line 490 to determine whether the second electronic device 500 is connected or whether moisture has entered.

According to an embodiment, the first battery 470 may be a rechargeable battery. The first electronic device 400 may charge the first battery 470 with power input from an external power source through the first charging circuit 430, and supply power required for each component of the first electronic device 400 by using the power of the first battery 470.

According to an embodiment, the first charging circuit 430 may charge the first battery 470 by using power input from an external power source, supply power to each component of the first electronic device 400, and/or transmit power to the second electronic device 500. According to an embodiment, the first charging circuit 430 may include a wired charging IC 432 including various circuit components for receiving power input from a wired power source connected through a wired port (e.g., a universal serial bus (USB) port), and a wireless charging IC 434 including various circuit components for receiving power input through a wireless charging antenna. For example, the wired charging IC 432 and/or the wireless charging IC 434 may include circuit components such as a power management IC (PMIC), voltage and current regulators, a battery protection circuit, and/or a rectifier. According to an embodiment, a charger 436 may include various circuit components for charging the first battery 470 by using power input from the wireless charging IC 434 and/or the wired charging IC 432.

According to an embodiment, when the first connection pin 420 is connected to a second connection pad 520 (or second connection terminal) of the second electronic device 500, an electrical path may be generated between the first electronic device 400 and the second electronic device 500. For example, when connecting the second electronic device 500, the first switching circuit 460 - the first connection pin 420 - the second connection pad 520 may generate one transmission line 490 (or single wire line) as one electrical node. The first connection pin 420 may be a pogo pin, but is not limited thereto.

According to an embodiment, the first connection pin 420 may include at least two terminals. One of the two terminals is connected to the ground, the other terminal of the first connection pin 420 is connected to the transmission line 490, and may be used for power transmission to the second electronic device 500 and data communication.

According to an embodiment, the first switching circuit 460 may connect the transmission line 490 to the first processor 410 or the first charging circuit 430 under the control of the first processor 410. For example, the first switching circuit 460 may include a single pole double throw (SPDT) switch. According to an embodiment, the first processor 410 may control the first switching circuit 460 to connect the first charging circuit 430 and the transmission line 490 including the first connection pin 420 during the power transmission time period, and control the first switching circuit 460 to connect the first processor 410 and the transmission line 490 including the first connection pin 420 during the data communication time period.

According to an embodiment, the first recognition circuit 440 is connected to the transmission line 490, and may be configured to output an electrical signal to the transmission line 490 according to a control signal of the first processor 410. For example, during the first time period (or device recognition period), the first processor 410 may control the first recognition circuit 440 to indicate an impedance level that may be detected as external device connection recognition by the transmission line 490 when an external device (e.g., the second electronic device 500) is connected, and during the second time period (or moisture recognition period), may control the first recognition circuit 440 to indicate an impedance level that may be detected as moisture ingress by the transmission line 490 when moisture ingresses.

According to an embodiment, the first recognition circuit 440 may include a variable resistor (or variable impedance). For example, the first recognition circuit 440 may include a first device recognition circuit used for connection recognition of the second electronic device 500 and a first moisture recognition circuit used for moisture recognition. FIG. 4A illustrates that the first device recognition circuit includes a first resistor 442 and a first pull-up switch 446, and the first moisture recognition circuit includes a second resistor 444, but is not limited thereto, and the first device recognition circuit and the first moisture recognition circuit may include two or more resistors connected in series/parallel. Alternatively, the first device recognition circuit and/or the first moisture recognition circuit may be configured as a current source that outputs the current of a specific value under the control of the first processor 410.

According to an embodiment, the first resistor 442 may be turned on/off depending on the first pull-up switch 446. According to an embodiment, the second resistor 444 may have a resistance value sufficiently greater than that of the first resistor 442. For example, the first resistor 442 may be about 1kΩ, and the second resistor 444 may be about 600kΩ. Accordingly, when the first pull-up switch 446 connected to the first resistor 442 is closed, the difference in magnitude between the current flowing from the input power source 448 to the transmission line 490 through the first resistor 442 and the current flowing through the second resistor 444 may be large.

According to an embodiment, the first processor 410 may control to output a first electrical signal from the first recognition circuit 440 to the transmission line 490 during the first time period (or device recognition period). For example, the first processor 410 controls the first pull-up switch 446 connected to the first resistor 442 to be closed during the first time period, and accordingly, a current may flow through the first resistor 442 to the transmission line 490 depending to the voltage applied to the input power source 448.

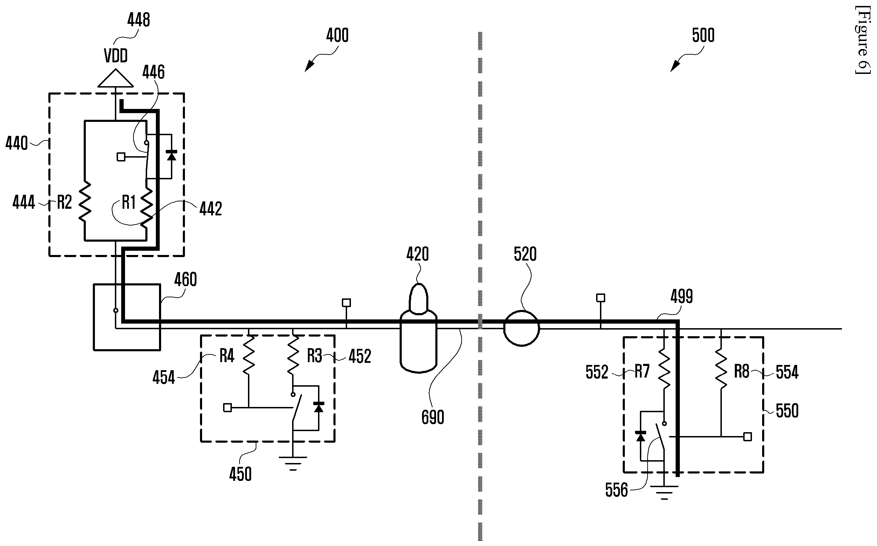

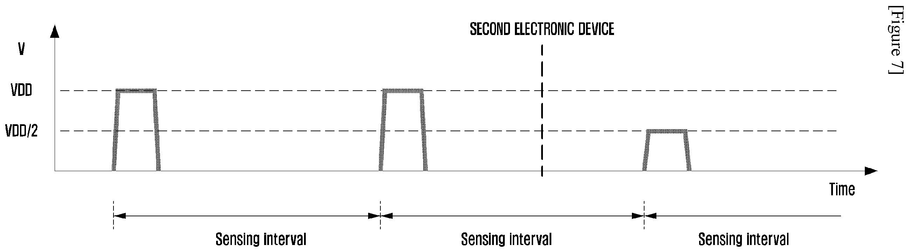

According to an embodiment, the first processor 410 may identify a first voltage value of a voltage applied to the transmission line 490 during the first time period, and identify whether an external device is connected to the first connection pin 420 based on the magnitude of the first voltage value. For example, when the second electronic device 500 is connected to the first electronic device 400, the pull-down resistor of the second recognized circuit 550 of the second electronic device 500 is connected to the transmission line 490, and accordingly, a voltage having a voltage value in a predetermined range may be applied to the transmission line 490. A method in which the first electronic device 400 recognizes whether the second electronic device 500 is connected will be described in more detail with reference to FIGS. 6 and 7.

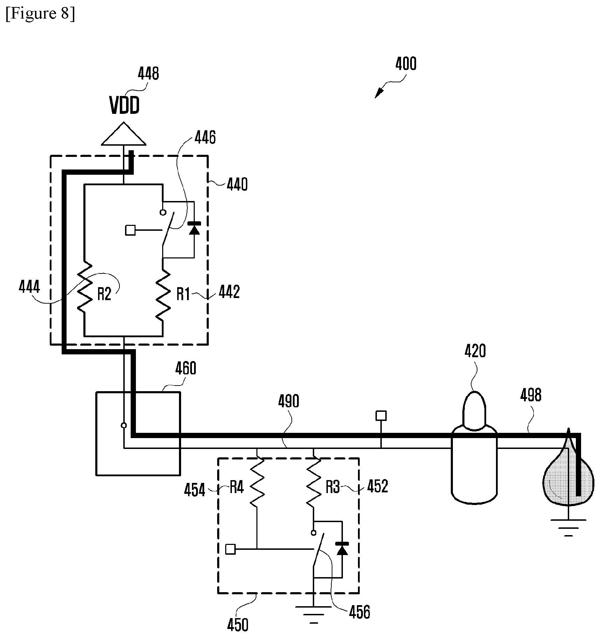

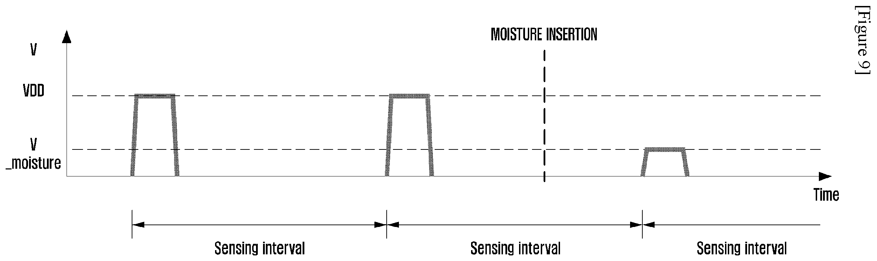

According to an embodiment, the first processor 410 may control to output a second electrical signal from the first recognition circuit 440 to the transmission line 490 during the second time period (or moisture recognition period). For example, the first processor 410 controls the first pull-up switch 446 connected to the first resistor 442 to be opened during the second time period, and accordingly, the path through the first resistor 442 is opened and a current may flow from the input power source 448 through the second resistor 444 to the transmission line 490. According to an embodiment, the first processor 410 may identify the second voltage value of the voltage applied to the transmission line 490 during the second time period, and identify whether moisture has entered the first connection pin 420 based on the magnitude of the second voltage value. A method in which the first electronic device 400 recognizes whether moisture has entered will be described in more detail with reference to FIGS. 8 and 9.

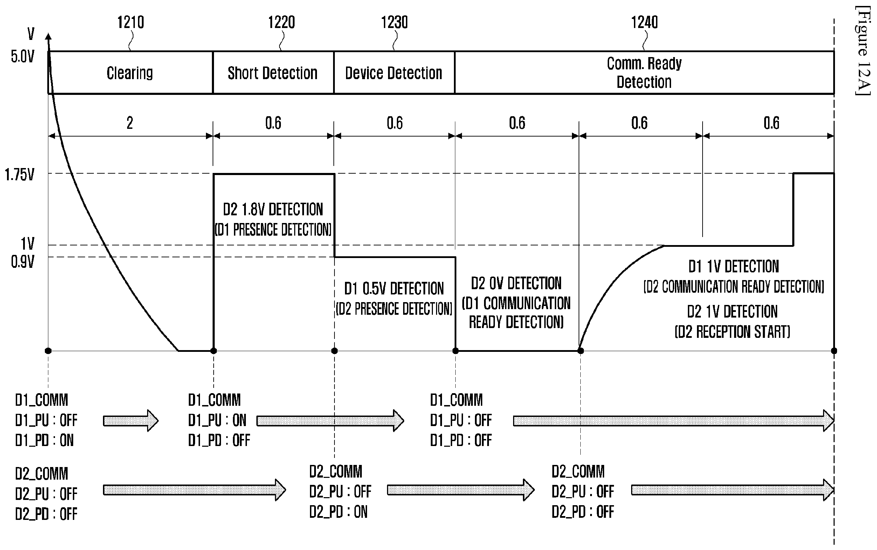

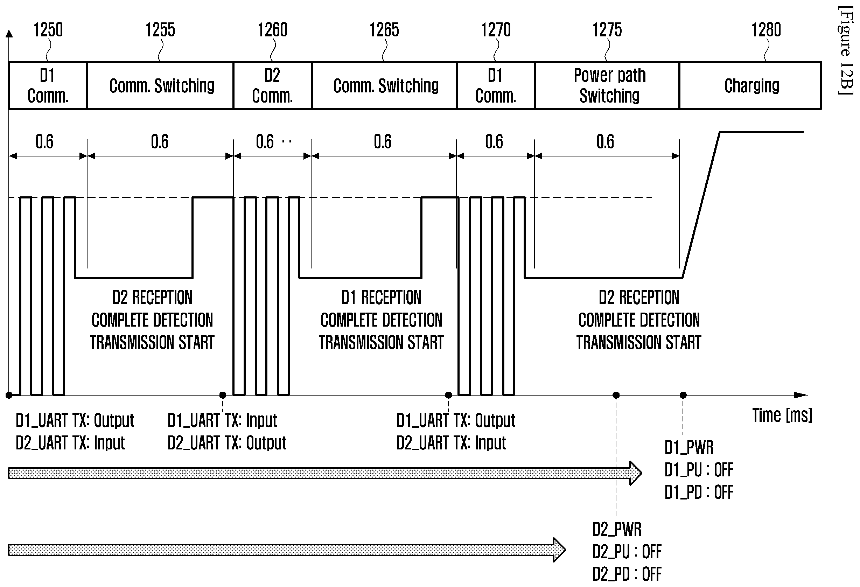

According to an embodiment, when it is identified that the second electronic device 500 is connected through the first connection pin 420, the first electronic device 400 may transmit external power or power of the first battery 470 to the second electronic device 500 in a time division method through the transmission line 490, and transmit and receive data to and from the second electronic device 500. According to an embodiment, the first processor 410 may schedule power transmission and data communication through the transmission line 490. For example, the first processor 410 may schedule in the following order: data transmission period of the first electronic device 400 - switching period - data transmission period of the second electronic device 500 - switching period - power transmission period. An operation after device recognition by the first electronic device 400 will be described in more detail with reference to FIG. 12.

According to an embodiment, the first recognized circuit 450 may be connected to the transmission line 490. For example, the first recognized circuit 450 may include a third resistor 452 and a fourth resistor 454 connected in parallel with each other. The third resistor 452 may be turned on/off through the first pull-down switch 456. According to an embodiment, the fourth resistor 454 may have a resistance value sufficiently greater than that of the third resistor 452, and for example, the third resistor 452 may be about 1kΩ and the fourth resistor 454 may be about 1MΩ (1megaΩ).

According to an embodiment, when the second electronic device 500 performs a recognition operation (or when the first electronic device 400 performs a recognized operation), the first processor 410 may close the first pull-down switch 456 connected to the third resistor 452. Accordingly, a voltage by an electrical signal output from the second recognition circuit 540 of the second electronic device 500 is applied to the transmission line 490, and the second electronic device 500 may detect the connection with the first electronic device 400.

According to an embodiment, when the first electronic device 400 is in a state other than the recognition operation, P1 may be configured to a pull-down state and the switch 456 may be in an open state.

According to an embodiment, when the first electronic device 400 is not connected to an external power source but connected to the second electronic device 500 while the first battery 470 is discharged, a current output by the input power source of the second electronic device 500 may flow to the fourth resistor 454 through the transmission line 490, and the first processor 410 may be electrically connected to the fourth resistor 454 to receive power required for a control operation such as switching of the first pull-up switch 446 and the first pull-down switch 456.

FIG. 4B is a circuit diagram of a second electronic device according to an embodiment.

Referring to FIG. 4B, the second electronic device 500 (e.g., the ear bud 150 of FIG. 1) may include a second processor 510, a second charging circuit 530, a second battery 570, a second recognition circuit 540, a second recognized circuit 550, a second switching circuit 560, and a second connection pad 520. The circuit configuration of the second charging circuit 530, the second battery 570, the second recognition circuit 540, the second recognized circuit 550, and the second switching circuit 560, which are components of the second electronic device 500, may be substantially the same as the circuit configuration of the first charging circuit 430, the first battery 470, the first recognition circuit 440, the first recognized circuit 450, and the first switching circuit 460 of the first electronic device 400. Accordingly, any overlapping description may be omitted below.

According to an embodiment, the second processor 510 may perform various control operations related to recognition of the first electronic device 400 (e.g., the cradle device 100 of FIG. 1 and the first electronic device 400 of FIG. 4A) connected through the second connection pad 520, power transmission to the first electronic device 400, and/or data communication.

According to an embodiment, the second battery 570 may be a rechargeable battery. The second battery 570 may be charged according to power input from the first electronic device 400 through the transmission line 590. According to an embodiment, the second charging circuit 530 may include various circuit components for charging the second battery 570 by using power input from the first electronic device 400.

According to an embodiment, when the second electronic device 500 is inserted into the first electronic device 400, the second connection pad 520 may be electrically connected by physically contacting the first connection pin 420 of the first electronic device 400. The second connection pad 520 may be a pogo pad, but is not limited thereto.

According to an embodiment, the second connection pad 520 may include two terminals. Since one of the two terminals is connected to the ground, one transmission line 590 including one terminal of the second connection pad 520 and one terminal of the first connection pin 420 may be used for power transmission and data communication between the first electronic device 400 and the second electronic device 500.

According to an embodiment, the second switching circuit 560 may connect the transmission line 590 to the second processor 510 or the second charging circuit 530 under the control of the second processor 510. For example, the second switching circuit 560 may include a single pole double throw (SPDT) switch.

According to an embodiment, the second processor 510 may control the second switching circuit 560 to connect the second charging circuit 530 and the transmission line 590 including the second connection pad 520 during the power transmission time period, and control the second switching circuit 560 to connect the second processor 510 and the transmission line 590 including the second connection pad 520 during the data communication time period.

According to an embodiment, the second recognition circuit 540 may be connected to the transmission line 590. The second recognition circuit 540 may include a variable resistor. For example, the second recognition circuit 540 may include a fifth resistor 542 and a sixth resistor 544, and the fifth resistor 542 may be turned on/off depending on the second pull-up switch 546 controlled by the second processor 510. According to an embodiment, the sixth resistor 544 may have a resistance value sufficiently greater than that of the fifth resistor 542. For example, the fifth resistor 542 may be about 1kΩ, and the sixth resistor 544 may be about 600kQ.

According to an embodiment, the second processor 510 may control the second pull-up switch 546 to be closed during the device recognition period, and accordingly, a current may flow through the fifth resistor 542 to the transmission line 590 depending on a voltage supplied by the input power source 548. The second processor 510 may recognize the connection with the first electronic device 400 by identifying the voltage value of the transmission line 590.

According to an embodiment, the second recognized circuit 550 may be connected to the transmission line 590. For example, the second recognized circuit 550 may include a seventh resistor 552 and an eighth resistor 554 connected in parallel with each other. The seventh resistor 552 may be turned on/off through the second pull-down switch 556. According to an embodiment, the eighth resistor 554 may have a resistance value sufficiently greater than that of the seventh resistor 552, and for example, the seventh resistor 552 may be about 1kΩ and the eighth resistor 554 may be about 1MΩ (1megaΩ).

According to an embodiment, when the second electronic device 500 is connected to the first electronic device 400, a current output by the input power source of the first electronic device 400 may flow to the eighth resistor 554 through the transmission line 590, and the second processor 510 may be electrically connected to the eighth resistor 554 to receive power required for an operation such as switching of the second pull-up switch 546 and the second pull-down switch 556.

According to an embodiment, when the first electronic device 400 performs a recognition operation, the second processor 510 may close the second pull-down switch 556 connected to the seventh resistor 552. Accordingly, a voltage by an electrical signal output from the first recognition circuit 440 of the first electronic device 400 is applied to the transmission line 490, and the first electronic device 400 may detect the connection with the second electronic device 500.

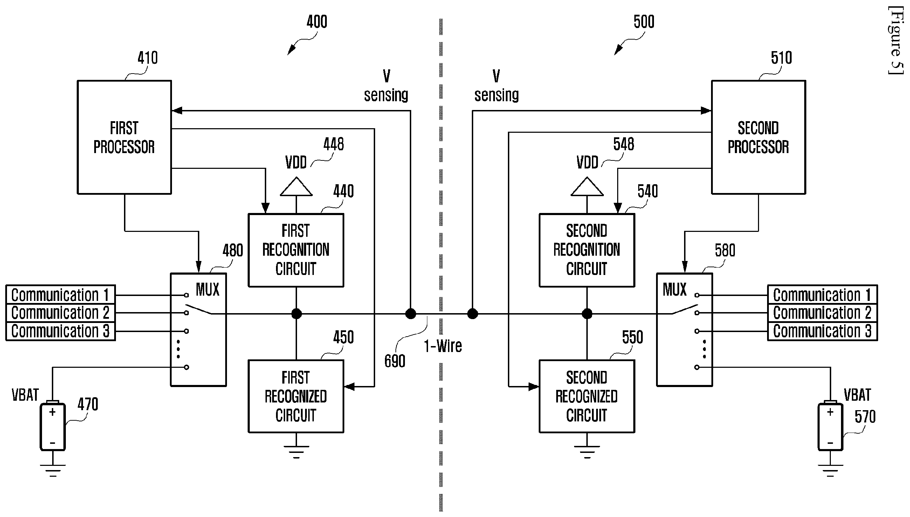

FIG. 5 is a circuit diagram of a first electronic device and a second electronic device according to an embodiment.

According to an embodiment, the first electronic device 400 (e.g., the charging cradle 100 of FIG. 1, the electronic device 300 of FIG. 3, and the first electronic device 400 of FIG. 4A) may include the first processor 410 (e.g., the processor 310 of FIG. 3 and the first processor 410 of FIG. 4A), the first recognition circuit 440 (e.g., the recognition circuit 340 of FIG. 3 and the first recognition circuit 440 of FIG. 4A), the first recognized circuit 450 (e.g., the recognized circuit 350 of FIG. 3 and the first recognized circuit 450 of FIG. 4A), the first battery 470, and the first Mux 480. The second electronic device 500 (e.g., the ear bud 150 of FIG. 1 and the second electronic device 500 of FIG. 4B) may include the second processor 510 (e.g., the second processor 510 of FIG. 4B), the second recognition circuit 540 (e.g., the second recognition circuit 540 of FIG. 4B), the second recognized circuit 550 (e.g., the second recognized circuit 550 of FIG. 4B), the second battery 570, and the second Mux 580.

According to an embodiment, when the first electronic device 400 and the second electronic device 500 are connected, a transmission line (e.g., the transmission line 490 of FIG. 4A) of the first electronic device and a transmission line (e.g., the transmission line 590 of FIG. 4B) of the second electronic device may be generated as one electrical node to constitute the transmission line 690 of FIG. 5. According to an embodiment, the first electronic device 400 and the second electronic device 500 may perform power transmission and data communication through one transmission line 690. For example, the first electronic device 400 may supply power of a connected external power source or the battery power of the first electronic device 400 to the second electronic device 500 through the transmission line 690, and transmit and receive data related to a battery state, a charge state, and/or firmware update to and from the second electronic device 500 through the transmission line 690. Since power transmission and data communication are performed through one transmission line 690, the first electronic device 400 and the second electronic device 500 may transmit power in some time periods and perform data communication in other time periods in a time-division method.

According to an embodiment, the first Mux 480 may switch the transmission line 690 to one of multiple channels. For example, the first electronic device 400 and the second electronic device 500 may use multiple channels for data communication, and may use a 1.2V channel to transmit and receive small amounts of data, such as battery status and charging status, and a 1.8 V channel to transmit and receive large amounts of data at high speeds, such as firmware updates.

According to an embodiment, the first processor 410 of the first electronic device 400 may determine a channel to be used for data communication with a counterpart device, and the first Mux 480 may switch to connect the determined channel to the transmission line 690.

According to an embodiment, the first processor 410 may control the first recognition circuit 440 to apply a voltage corresponding to the determined channel on the transmission line 690 in order to transmit the determined channel information to the second electronic device 500. For example, the first processor 410 may determine a current value of the current source of the first recognition circuit 440 or a resistance value of resistors connected in a serial-parallel structure. When the second processor 510 of the second electronic device 500 operates the second recognized circuit 550, a voltage having a specific voltage value may be applied to the transmission line 690. According to an embodiment, the first electronic device 400 and the second electronic device 500 may pre-map each channel to be used for data communication and a voltage having a voltage value to be applied to the transmission line 690. Accordingly, the second processor 510 may detect the voltage value of the transmission line 690 and control the second Mux 580 to connect a channel corresponding to the detected voltage value to the transmission line 690.

According to an embodiment, the second processor 510 may operate the second recognized circuit 550 in advance when not communicating with the first electronic device 400, thereby enabling quick recognition.

According to an embodiment, in order to enable switching from an allocated channel to another channel for data communication, the first electronic device 400 and the second electronic device 500 may switch to the initial state when the voltage of the transmission line 490 is recognized as a specific voltage value (e.g., 0V) because a predetermined time elapses after one channel is allocated, and/or all communications are terminated. After initialization, the first electronic device 400 and the second electronic device 500 may perform processes for channel allocation for connection to a new channel, and accordingly, data communication may be possible through time division in multiple channels.

According to an embodiment, the first Mux 480 and/or the second Mux 580 may connect the transmission line 490 to a battery or charging circuit for power transmission and reception as well as a data communication channel. Accordingly, power transmission and data communication may be performed in a time division method through one transmission line 490.

According to an embodiment, various voltage values may be applied to the input power source 448 of the first electronic device 400 and/or the input power source 548 of the second electronic device 500.

According to an embodiment, the first recognition circuit 440 of the first electronic device 400 and/or the second recognition circuit 540 of the second electronic device 500 may generate various resistance values. For example, the pull-up resistors 442 and 542 and pull-up switches 446 and 546 may include a configuration in which multiple components are connected in parallel, and various resistance values may be generated by turning on/off the switches 446 and 546 under the control of the processors 410 and 510.

According to an embodiment, the first recognized circuit 450 of the first electronic device 400 and/or the second recognized circuit 550 of the second electronic device 500 may generate various resistance values. For example, the pull-down resistors 452 and 552 and pull-down switches 456 and 556 may include a configuration in which multiple components are connected in parallel, and various resistance values may be generated by turning on/off the switches 456 and 556 under the control of the processors 410 and 510.

FIG. 6 illustrates a transmission path of an electrical signal when a first electronic device and a second electronic device recognize a device according to an embodiment.

According to an embodiment, the first processor 410 (e.g., the first processor 410 of FIG. 4A) of the first electronic device 400 may control the first recognition circuit 440 (e.g., the first recognition circuit 440 of FIG. 4A) to output a first electrical signal to the transmission line 690 during the first time period (or device recognition period). The first electronic device 400 may allocate an impedance corresponding to a device to the first recognition circuit 440 and determine a voltage value of the transmission line 690 according to the allocated impedance to determine whether the device is connected.

According to an embodiment, when the first electronic device 400 and the second electronic device 500 are connected, the transmission line (e.g., the transmission line 490 of FIG. 4A) of the first electronic device and the transmission line (e.g., the transmission line 590 of FIG. 4B) of the second electronic device may be generated as one electrical node to configure the transmission line 690 of FIG. 6.

According to an embodiment, the first processor 410 may control the first pullup switch 446 connected to the first resistor 442 of the first recognition circuit 440 to be closed. Since the second resistor 444 connected in parallel with the first resistor 442 has a resistance value sufficiently greater than that of the first resistor 442, most of the current generated depending on the input power source may flow through the first resistor 442 to the transmission line 690.

According to an embodiment, when a connection with the first electronic device 400 is detected, the second processor 510 (e.g., the second processor 510 of FIG. 4B) of the second electronic device 500 may control the second recognized circuit 550 (e.g., the second recognized circuit 550 of FIG. 4B) to have a predetermined resistance value. For example, the second processor 510 may control the second pull-down switch 556 connected to the seventh resistor 552 to be closed. Since the seventh resistor 552 has a resistance value sufficiently lower than that of the eighth resistor 554 connected in parallel, most of the current flowing from the transmission line 690 may flow to the ground through the seventh resistor 552 when the second pull-down switch 556 is closed.

Referring to FIG. 6, as the first pull-up switch 446 and the second pull-down switch 556 are closed, a current flows through the first resistor 442 and the seventh resistor 552, and accordingly, a transmission path 499 through which the current flows from the input power source Vdd (e.g., about 1.8V) to the ground through the first resistor 442, the first switching circuit 460, the transmission line 690, and the seventh resistor 552 may be generated.

In this case, a voltage having a voltage value distributed by the first resistor 442 and the seventh resistor 552 may be applied to the transmission line 690. For example, when the first resistor 442 and the seventh resistor 552 have the same resistance value (e.g., about 1kQ), a voltage having a voltage value of about Vdd/2 (e.g., about 0.9V) may be applied to the transmission line 690.

According to an embodiment, the first processor 410 may sense a voltage value of a voltage applied to the transmission line 690 to identify whether the second electronic device 500 is connected. For example, when the voltage value sensed by the transmission line 690 is detected within a predetermined range (e.g., about 0.9V), the first processor 410 may determine that the second electronic device 500 is connected through the first connection pin 420.

FIG. 7 illustrates an electrical signal detected when a second electronic device is inserted into a first electronic device according to an embodiment.

According to an embodiment, the first electronic device 400 (e.g., the electronic device 400 of FIG. 4A) may control the first recognition circuit 440 to output a first electrical signal to the transmission line 690 during the first time period (or device recognition period), and identify the voltage value of the voltage applied to the transmission line 690 according to a predetermined sensing interval while the first electrical signal is output.

As described above with reference to FIG. 6, as the first recognition circuit 440 of the first electronic device 400 and the second recognition circuit 550 of the second electronic device 500 are controlled during the first time period, a transmission path through which a current flows from the input power source Vdd (e.g., about 1.8V) to the ground through the first resistor 442, the first switching circuit 460, the transmission line 690, and the seventh resistor 552 may be generated. In this case, a voltage having a voltage value distributed according to the first resistor 442 and the seventh resistor 552 may be applied to the transmission line 690. For example, when the first resistor 442 and the seventh resistor 552 have the same resistance value (e.g., about 1kΩ) and the second electronic device 500 is not connected, a voltage having a voltage value of about Vdd (e.g., about 1.8V) is applied to the transmission line 690, and when the second electronic device 500 is connected, a voltage having a voltage value of about Vdd/2 (e.g., about 0.9V) may be applied to the transmission line 690.

Referring to FIG. 7, the first electronic device 400 may determine that the second electronic device 500 is not connected to the first connection pin 420 because the voltage value of the transmission line 690 is detected as about Vdd in the first interval and the second interval. Thereafter, when the voltage value of the transmission line 690 is detected as about Vdd/2 in the third interval, it may be determined that the second electronic device 500 is connected to the first connection pin 420.

FIG. 8 illustrates a transmission path of an electrical signal when moisture is recognized by the first electronic device 400 according to an embodiment.

According to an embodiment, the first processor 410 (e.g., the first processor 410 of FIG. 4A) of the first electronic device 400 may control the first recognition circuit 440 (e.g., the first recognition circuit 440 of FIG. 4A) to output a second electrical signal to the transmission line 490 during the second time period (or moisture recognition period) before or after the first time period (or device recognition period). The first electronic device 400 may control the first recognition circuit 440 to allocate a predetermined impedance for moisture detection, and determine whether moisture has entered by determining a voltage value of the transmission line 490 according to the allocated impedance.

According to an embodiment, the first processor 410 may control the first pullup switch 446 connected to the first resistor 442 of the first recognition circuit 440 to be opened. Accordingly, the first resistor 442 is turned off, and a current generated depending on the input power source may flow through the second resistor 444 to the transmission line 490.

According to an embodiment, when moisture has not entered, a voltage having a voltage of about Vdd (e.g., about 1.8 V) may be applied to the transmission line 490. The first processor 410 may sense the voltage value of the transmission line 490, and if a voltage value of about Vdd is detected, it may be determined that moisture has not entered.

According to an embodiment, when moisture has entered, a voltage less than or equal to V_moisture (e.g., about 0.5V) may be applied to the transmission line 490. The first processor 410 may sense the voltage value of the transmission line 490, and if a voltage value of less than or equal to V_moisture is detected, it may be determined that moisture has entered.

FIG. 9 illustrates an electrical signal detected when moisture is inserted into a first electronic device according to an embodiment.

According to an embodiment, the first electronic device 400 may control the first recognition circuit 440 to output a second electrical signal to the transmission line during the second time period (or moisture recognition period), and identify the voltage value of the voltage applied to the transmission line 490 according to a predetermined sensing interval while the second electrical signal is output. When the identified voltage value is less than or equal to a reference value (e.g., V_moisture), the first electronic device may determine that moisture has entered.

Referring to FIG. 9, since the voltage value of the transmission line 490 is detected as about Vdd in the first and second intervals, the first electronic device 400 may determine that moisture has not entered the first connection pin 420. Thereafter, when the voltage value of the transmission line 490 is detected to be less than or equal to V_moisture in the third interval, it may be determined that moisture has entered the first connection pin 420.

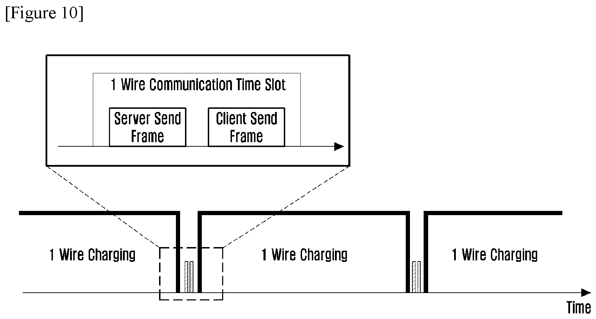

FIG. 10 illustrates a timing of power transmission and data communication according to an embodiment.

According to an embodiment, a first electronic device (e.g., the charging cradle 100 of FIG. 1, the first electronic device 400 of FIG. 4A), and a second electronic device (e.g., the ear bud 150 of FIG. 1 and the second electronic device 500 of FIG. 4B) may implement multi-channel communication and power transmission by using one transmission line (e.g., the transmission line 490 of FIG. 4A). To this end, the first electronic device may transmit external power or power of the first battery to the second electronic device in a time division method, and transmit and receive data to and from the second electronic device in a time division method.

According to an embodiment, when it is identified that the second electronic device is connected to the first connection pin, the first electronic device (or the first processor) may transmit data to the second electronic device through a transmission line during the third time period, and receive data transmitted from the second electronic device through the transmission line during the fourth time period before or after the third time period. The first electronic device may supply power supplied from the first battery or the external power to the first charging circuit (e.g., the first charging circuit of FIG. 4A) to the second external device through the transmission line during the third time period and the fifth time period before or after the fourth time period.

Referring to FIG. 10, a time slot (or a 1-wire communication time slot) for data communication may be generated between the charging periods. The time slot may be cross-allocated between a server (e.g., a first electronic device) transmission frame (server send frame) and a client (e.g., a second electronic device) transmission frame (client send frame).

According to an embodiment, the first electronic device and the second electronic device may sequentially transmit data a predetermined number of times and then perform power transmission through the transmission line again. For example, in FIG. 10, the 1-wire communication time slot between 1-wire charging periods may be generated a predetermined number of times.

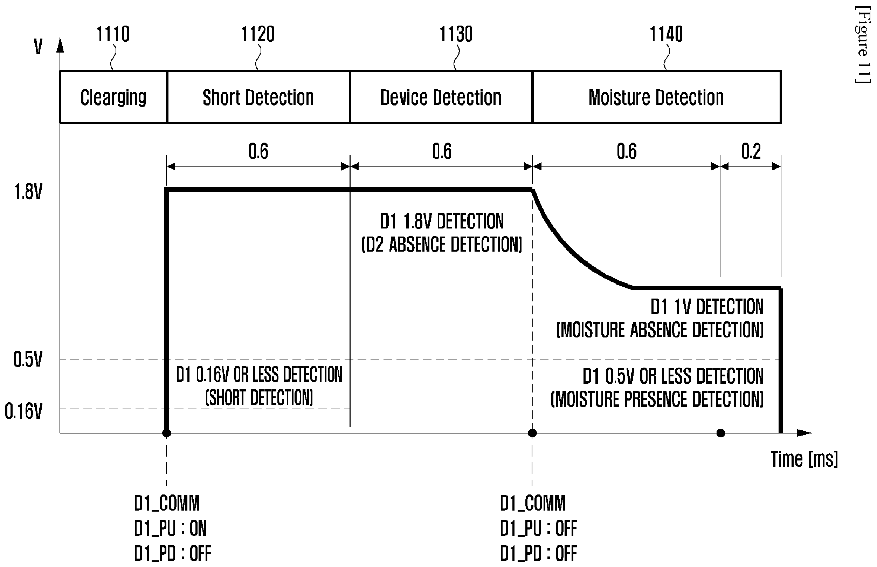

FIG. 11 illustrates an operation of a first electronic device according to an electrical signal detected in a state where a second electronic device is not inserted into the first electronic device according to an embodiment.

According to an embodiment, in a state where the second electronic device (e.g., the second electronic device 500 of FIG. 4B) is not connected, the first electronic device (e.g., the first electronic device 400 of FIG. 4A) may output an electrical signal to the transmission line by using the first recognition circuit to measure the state of the first connection pin (e.g., whether the circuit is shorted, whether the second electronic device is connected, or whether moisture has entered), and detect a voltage value of the voltage applied to the transmission line.

According to an embodiment, during an initialization (or clearing) period 1110, the first electronic device may perform the initialization operation 1110 prior to a short-circuit detection period 1120, a device recognition operation 1130, and a moisture recognition operation 1140. For example, the first electronic device may cut off the power supplied to the first recognition circuit and transmission line from the input power source, and reduce the charge of the capacitor connected to the transmission line accumulated in the previous mode. During the initialization period 1110, the first electronic device may turn off the first pull-up switch D1_PU (e.g., the first pull-up switch 446 of FIG. 4A) connected to the first resistor (e.g., the first resistor 442 of FIG. 4A) and turn on the first pull-down switch D1_PD (e.g., the first pull-down switch 456 of FIG. 4A) connected to the third resistor (e.g., the third resistor 452 of FIG. 4A).

According to an embodiment, during the short-circuit detection period 1120, the first electronic device may detect whether the transmission line is short-circuited. The first electronic device may turn on the first pull-up switch D1_PU and turn off the first pull-down switch D1_PD. Accordingly, the input power source Vdd may be electrically connected to the first resistor, the transmission line, and the fourth resistor (e.g., the fourth resistor 454 of FIG. 4A).

Referring to FIG. 11, as a result of measuring the voltage value of the transmission line, the first electronic device may detect about 1.8V corresponding to the input power source Vdd. Accordingly, the first electronic device may determine that no short circuit has occurred in the circuit including the transmission line. Conversely, when a voltage value lower than or equal to a predetermined voltage value (e.g., 0.16 V) is detected on the transmission line, the first electronic device may determine that a short circuit has occurred in the circuit.

According to an embodiment, when no short circuit has occurred in the circuit, the first electronic device may perform the device recognition operation 1130. When the second electronic device is not connected to the first connection pin, the transmission line is in an open state, so the voltage value of the transmission line may be substantially the same as the voltage value of the input power source Vdd. Conversely, when the second electronic device is connected to the first connection pin, an electrical path with the second recognized circuit of the second electronic device is generated and thus a voltage drop occurs, so that a voltage lower than that of the input power may be applied to the transmission line depending the voltage distribution between the first resistor and the second recognized circuit (e.g., the seventh resistor in FIG. 4B).

According to an embodiment, when the device connection is not detected, the first electronic device may perform the moisture recognition operation 1140. According to an embodiment, the first electronic device may turn off the first pull-up switch P1_PU and maintain the off state of the first pull-down switch P1_PD during the moisture recognition period. If no moisture has entered, the current generated by the input power source may flow to the second resistor, the transmission line, and the fourth resistor, and the voltage applied to the transmission line may have a voltage value of about 1 V, which is lower than 1.8 V of the input power source Vdd. Conversely, when moisture has entered the first connection pin, the voltage applied to the transmission line may have a voltage value lower than 1.0 V (e.g., 0.5 V or lower) depending on the voltage distribution due to moisture. When a low voltage value lower than a specified reference value (e.g., 0.16 V) is detected on the transmission line, the first electronic device may determine that a short circuit has occurred in the circuit.

Referring to FIG. 11, the first electronic device may perform the short-circuit detection operation 1120, the device recognition operation 1130, and the moisture recognition operation 1140 for predetermined times (e.g., 0.6ms, 0.6ms, and 0.6ms), respectively, and if the device connection and moisture are not recognized during one cycle, the same operation may be repeated after going through the initialization process 1110 again.

FIGS. 12A and 12B illustrate the operation of a first electronic device according to an electrical signal detected when a second electronic device is inserted into the first electronic device according to an embodiment.

According to an embodiment, during an initialization (or clearing) period 1210, the first electronic device may perform an initialization operation prior to the device recognition operation. For example, the first electronic device may cut off the power supplied to the first recognition circuit and transmission line from the input power source, and reduce the charge of the capacitor connected to the transmission line accumulated in the previous mode. During the initialization period 1210, the first electronic device may turn off the first pull-up switch D1_PU (e.g., the first pull-up switch 446 of FIG. 4A) connected to the first resistor (e.g., the first resistor 442 of FIG. 4A) and turn on the first pull-down switch D1_PD (e.g., the first pull-down switch 456 of FIG. 4A) connected to the third resistor (e.g., the third resistor 452 of FIG. 4A). According to an embodiment, the power transmission mode 1280 may be in a state before the initialization (or clearing) period 1210.

According to an embodiment, after initialization, the first electronic device may perform a short-circuit detection operation 1220. The first electronic device may turn on the first pull-up switch P1_DU and turn off the first pull-down switch P1_PD. Accordingly, the first resistor and the third resistor may be turned on, and an electrical path connecting the first resistor, the transmission line, and the third resistor from the input power source Vdd may be generated. As a result of measuring the voltage value of the transmission line, the first electronic device may detect about 1.8V corresponding to the input power source Vdd. Accordingly, the first electronic device may determine that no short circuit has occurred in the circuit including the transmission line.

According to an embodiment, when the second electronic device is connected to the first electronic device, a current flowing by the input power source of the first electronic device may flow to the second recognized circuit (or the eighth resistor) of the second electronic device. According to an embodiment, the current flowing to the second recognized circuit may be supplied to the second processor of the second electronic device, and the second processor may receive power for operations such as controlling the second recognition circuit and/or the second recognized circuit even when the second battery of the second electronic device is discharged. The second processor may measure a voltage value of the voltage applied to the transmission line, detect about 1.8 V, and identify that the second electronic device is connected to the first electronic device.

According to an embodiment, when no short circuit has occurred in the circuit, the first electronic device and the first electronic device may perform a device recognition operation 1230. The second electronic device may maintain the off state of the second pull-up switch P2_DU and turn on the second pull-down switch to turn on the seventh resistor of the second recognized circuit. Accordingly, when the second electronic device is connected, a transmission path through which a current flows from the input power source Vdd (e.g., about 1.8V) to the ground through the first resistor, the transmission line, and the seventh resistor may be generated, and the voltage applied to the transmission line may be about 0.9V.

When the first electronic device and the second electronic device detect a connection to each other, the first electronic device and the second electronic device may perform a communication preparation detection operation 1240 for detecting whether the other party is ready for data communication. According to an embodiment, the first electronic device may turn off the first pull-up switch P1_DU and maintain the off state of the first pull-down switch P1_PD. Since the seventh resistor of the second electronic device is in the on state and the seventh resistor has a resistance value sufficiently lower than that of the fourth resistor of the first electronic device, the voltage value of the voltage applied to the transmission line may be a value close to 0V. When a voltage value of about 0V is detected on the transmission line, the second processor of the second electronic device may determine that the first electronic device is ready for data communication, maintain the off state of the second pull-up switch P2_DU, and turn off the second pull-down switch P2_PD.

According to an embodiment, as the second electronic device turns off the second pull-down switch P2_PD, the voltage value of the voltage applied to the transmission line increases and about 1V may be detected. When the voltage value of the transmission line is detected as about 1 V, the first electronic device may determine that the second electronic device is ready for data communication. In addition, When the voltage value of the transmission line is detected as about 1 V, the second electronic device may initiate an operation to receive data transmitted from the first electronic device through UART.

According to an embodiment, when data communication readiness is identified, the first electronic device and the second electronic device may perform data communication. The first electronic device and the second electronic device may transmit and receive data in a time-division manner by using one transmission line, and may include a switching period 1255 between a transmission period 1250 of the first electronic device and a transmission period 1260 of the second electronic device.

According to an embodiment, during the transmission period 1250 of the first electronic device, data of the first electronic device may be transmitted to the second electronic device through a transmission line by using UART. After transmitting data for a predetermined time, the first electronic device may stop transmitting data, and in this case, a voltage of about 1 V may be applied again on the transmission line.

According to an embodiment, the second electronic device may identify that the transmission period of the first electronic device is completed after the voltage of 1 V is detected for a predetermined time, and may initiate data transmission of the second electronic device.

According to an embodiment, during the transmission period 1260 of the second electronic device, data of the second electronic device may be transmitted to the first electronic device through a transmission line by using UART. After transmitting data for a predetermined time, the second electronic device may stop transmitting data, and in this case, a voltage of about 1 V may be applied again on the transmission line.

According to an embodiment, the first electronic device and the second electronic device may alternately transmit data as illustrated in FIG. 12B. In this case, the number, time length, and/or packet size of the transmission periods 1250 and 1270 of the first electronic device and the transmission period 1260 of the second electronic device may be determined according to the size of data to be transmitted from each device.

According to an embodiment, after completing data transmission, the first electronic device and the second electronic device may perform a switching operation 1275 to the power transmission mode 1280. For example, the first electronic device may switch so that the first switching circuit connects the transmission path and the first charging circuit, and the second electronic device may switch so that the second switching circuit connects the transmission path and the second charging circuit. When switching is completed, during the power transmission mode 1280, the first electronic device may transmit power of a connected external power source or the first battery power to the second electronic device through the transmission line. The second electronic device may charge the second battery by using the power transmitted from the first electronic device.

According to an embodiment, the first electronic device and the second electronic device may switch back to the data communication period from the power transmission mode 1280. For example, after transmitting power for a predetermined time, the first electronic device and the second electronic device may discharge the voltage applied to the transmission line, identify whether the voltage value of the transmission line is lower than the input power source Vdd, and then resume data communication, such as the transmission period 1250 of the first electronic device, the switching period 1255, the transmission period 1260 of the second electronic device, and the switching period 1265.

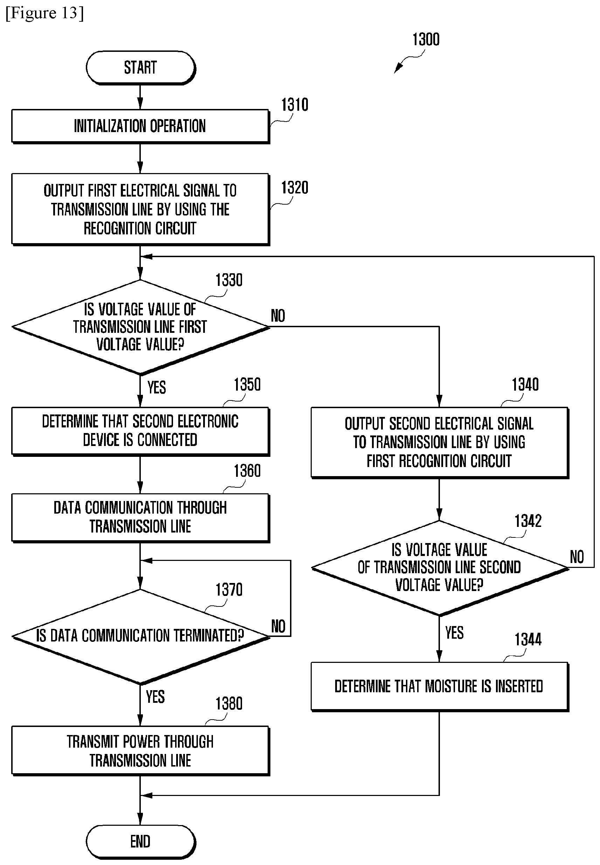

FIG. 13 is a flowchart of a method performed by a first electronic device according to an embodiment.

The illustrated method may be performed by the first electronic device (e.g., the charging cradle 100 of FIG. 1 and the electronic device 300 of FIG. 3). The technical features described above may be omitted from the description below.

According to an embodiment, in operation 1310, the first electronic device may perform an initialization (or clearing) operation. For example, the first electronic device may cut off the power supplied to the first recognition circuit and transmission line from the input power source, and reduce the charge of the capacitor connected to the transmission line accumulated in the previous mode. The first electronic device may perform a device recognition operation after initialization.

According to an embodiment, in operation 1320, the first electronic device may output the first electrical signal to the transmission line by using the first recognition circuit. The first recognition circuit (e.g., the first recognition circuit of FIG. 4A) is connected in parallel with a transmission path connected to the second electronic device through the first recognition pin (e.g., the first recognition pin of FIG. 4A), and may be configured to output an electrical signal to the transmission line according to a control signal of the first processor. The first recognition circuit may include a variable resistor and/or may include a current source.

According to an embodiment, the first electronic device may control the first pull-up switch (e.g., the first pull-up switch of FIG. 4A) connected to the first resistor (e.g., the first resistor of FIG. 4A) of the first recognition circuit to be closed in order to output the first electrical signal from the first recognition circuit to the transmission line, and accordingly, a current may flow through the first resistor to the transmission line depending on the voltage supplied from the input power source. When the second electronic device is not connected to the first connection pin, since the transmission line is in an open state, the voltage value of the transmission line may be substantially the same as the voltage value of the input power source Vdd. Conversely, when the second electronic device is connected to the first connection pin, as an electrical path is generated with the second recognized circuit of the second electronic device and a voltage drop occurs, a voltage value (e.g., 0.9 V) lower than that of the input power may be applied to the transmission line depending on the voltage distribution by the first resistor and the second recognized circuit of the second electronic device (e.g., the seventh resistor in FIG. 4B).

According to an embodiment, in operation 1330, the first electronic device may identify whether the voltage value of the voltage applied to the transmission line is a first voltage value. Here, the first voltage value may be a voltage value (e.g., 0.9 V) of a voltage applied to the transmission line depending on the voltage distribution by the first recognition circuit of the first electronic device and the second recognized circuit of the second electronic device when the second electronic device is connected.

According to an embodiment, when the voltage value of the voltage applied to the transmission line is not the first voltage value (or is the input power source Vdd), the first electronic device may perform a moisture recognition operation.

According to an embodiment, in operation 1340, the first electronic device may output a second electrical signal to the transmission line by using the first recognition circuit. For example, the current generated by the input power source of the first electronic device may flow to the second resistor, the transmission line, and the fourth resistor, and the voltage applied to the transmission line may have a voltage value of about 1 V, which is lower than 1.8 V of the input power source Vdd. Conversely, when moisture has entered the first connection pin, the voltage applied to the transmission line may have a voltage value lower than 1.0 V (e.g., 0.5 V or less) depending on the voltage distribution due to the moisture.

According to an embodiment, in operation 1342, the first electronic device may identify whether the voltage value of the transmission line is the second voltage value. When the voltage value of the transmission line is the second voltage value (e.g., 0.5 V or less), in operation 1344, the electronic device may determine that moisture has entered the first connection pin. When the voltage value of the transmission line is not the second voltage value, the first electronic device may perform the device recognition operation prior to operation 1330 again.

According to an embodiment, when the voltage value of the voltage applied to the transmission line as a result of the identification of operation 1330 is the first voltage value, in operation 1350, the first electronic device may determine that the second electronic device is connected.

According to an embodiment, in operation 1360, the first electronic device may perform data communication with the second electronic device through the transmission line. For example, the data communication period may be scheduled in the following order: data transmission period of the first electronic device - switching period - data transmission period of the second electronic device - switching period. The first electronic device and the second electronic device may transmit and receive data in a manner such as a universal asynchronous receiver/transmitter (UART).

According to an embodiment, in operation 1370, the first electronic device may identify whether the data communication is terminated. For example, the number, time length, and/or packet size of the transmission period of the first electronic device and the transmission period of the second electronic device may be determined according to the size of data to be transmitted from each device.

According to an embodiment, when the data communication is terminated, the first electronic device may transmit power to the second electronic device through the transmission line in operation 1380. The first electronic device may control the first switching circuit (e.g., the first switching circuit of FIG. 4A) to connect the transmission line to the first charging circuit for power transmission. The first electronic device may transmit power of a connected external power source or the first battery power to the second electronic device through the transmission line. The second electronic device may charge the second battery by using the power transmitted from the first electronic device.

According to an embodiment, after the charging period has elapsed, the first electronic device and the second electronic device may perform data communication again through the transmission line. For example, if it is determined that the second electronic device is connected, the first electronic device may continuously or repeatedly perform operations 1360 to 1380 until the battery of the second electronic device is fully charged.

According to an embodiment, instructions for performing each operation constituting the method 1300 may be stored in a computer-readable recording medium that is tangible and non-transitory.

An electronic device 300 according to various embodiment of the disclosure may include a processor 310, a connection terminal 320 configured to be connected to an external device, a transmission line 390 connected to the connection terminal and transmitting and receiving power or data to and from an external device when the external device is connected, and a recognition circuit 340 connected to the transmission line and outputting an electrical signal to the transmission line.

According to an embodiment, the processor may be configured to control the recognition circuit to output a first electrical signal to the transmission line during a first time period, identify a voltage value of the voltage applied to the transmission line while the first electrical signal is output, and determine whether the external device is connected to the connection terminal, based on the identified first voltage value.

According to an embodiment, the recognition circuit may include a variable resistor, and the processor may control the recognition circuit to have a first resistance value in order to output the first electrical signal to the transmission line.

According to an embodiment, the recognition circuit may include an input power source and a first register connected to the input power source, and the processor may be configured to identify a first voltage value of the voltage applied to the transmission line according to a current flowing from the input power source through the first resistor to the transmission line during the first time period.

According to an embodiment, the recognition circuit may include a second resistor connected in parallel with the first resistor and having a higher resistance value than the first resistor, and the processor may be configured to identify a second voltage value of the voltage applied to the transmission line according to the current flowing through the second resistor to the transmission line during a second time period before or after the first time period, and determine whether moisture has entered the connection terminal, based on the second voltage value.

According to an embodiment, the electronic device may further include a pullup switch connected to the first resistor, turned on during the first time period to allow a current to flow to the first resistor by the input power source, and turned off during the second time period to prevent a current from flowing to the first resistor.

According to an embodiment, the electronic device may further include a recognized circuit connected to the transmission line and including a variable resistor.

According to an embodiment, when the external device is connected to the connection terminal, the power of the external device may be supplied to the recognized circuit.

According to an embodiment, the electronic device may further include a charging circuit, and a switching circuit for switching the processor or the charging circuit to be connected to the transmission line.

According to an embodiment, the processor may be configured to transmit data to the external device through the transmission line during the third time period, based on the identified first voltage value, when it is identified that the external device is connected to the connection terminal, and receive data transmitted from the external device through the transmission line during the fourth time period before or after the third time period.

According to an embodiment, the processor may be configured to supply power from the charging circuit to the external device through the transmission line during the fifth time period that is before or after the third time period and the fourth time period.

According to an embodiment, the processor may determine a channel to be used for data communication with the external device, and control the recognition circuit so that a voltage corresponding to the determined channel is applied to the transmission line.

According to an embodiment, the external device may be an ear bud.

In a method performed by an electronic device according to various embodiment of the disclosure, the electronic device may include a connection terminal configured to be connected to an external device, a transmission line connected to the connection terminal and transmitting and receiving power or data to and from an external device when the external device is connected, and a recognition circuit connected to the transmission line and outputting an electrical signal to the transmission line.

According to an embodiment, the method may include outputting a first electrical signal from the recognition circuit to the transmission line during a first time period, identifying a voltage value of the voltage applied to the transmission line while the first electrical signal is output, and determining whether the external device is connected to the connection terminal, based on the identified first voltage value.

According to an embodiment, the recognition circuit may include a variable resistor, and the outputting the first electrical signal may include controlling the recognition circuit to have a first resistance value in order to output the first electrical signal to the transmission path.

According to an embodiment, the recognition circuit may include an input power source and a first register connected to the input power source, and the identifying a voltage value of the voltage applied to the transmission line may include identifying a first voltage value of the voltage applied to the transmission line according to a current flowing from the input power source through the first resistor to the transmission line during the first time period.

According to an embodiment, the recognition circuit may include a second resistor connected in parallel with the first resistor and having a higher resistance value than the first resistor, and the method may further include identifying a second voltage value of the voltage applied to the transmission line according to the current flowing through the second resistor to the transmission line during a second time period before or after the first time period, and determining whether moisture has entered the connection terminal, based on the second voltage value.

According to an embodiment, the method may further include transmitting data to the external device through the transmission line during the third time period, based on the identified first voltage value, when it is identified that the external device is connected to the connection terminal, and receiving data transmitted from the external device through the transmission line during the fourth time period before or after the third time period.

According to an embodiment, the method may further include supplying power from the charging circuit to the external device through the transmission line during the fifth time period that is before or after the third time period and the fourth time period.

According to an embodiment, the method may further include determining a channel to be used for data communication with the external device, and controlling the recognition circuit so that a voltage corresponding to the determined channel is applied to the transmission line.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory storing one or more computer programs;
one or more processors communicatively coupled to the memory;
a connection terminal configured to be connected to an external device;
a transmission line connected to the connection terminal and configured to transmit and receive power or data to and from the external device when connected to the external device; and
a recognition circuit connected to the transmission line and configured to output an electrical signal to the transmission line,
wherein the one or more computer programs include computer-executable instructions that, when executed by the one or more processors individually or collectively, cause the electronic device to:
control the recognition circuit to output a first electrical signal to the transmission line during a first time period,
identify a first voltage value of a voltage applied to the transmission line while the first electrical signal is output, and
determine whether the external device has been connected to the connection terminal, based on the identified first voltage value.

2. The electronic device of claim 1,
wherein the recognition circuit comprises a variable resistor, and
wherein the one or more computer programs further include computer-executable instructions that, when executed by the one or more processors individually or collectively, cause the electronic device to control the recognition circuit to have a first resistance value in order to output the first electrical signal to the transmission line.

3. The electronic device of claim 1 or claim 2,
wherein the recognition circuit comprises:
an input power source, and
a first register connected to the input power source, and
wherein the one or more computer programs further include computer-executable instructions that, when executed by the one or more processors individually or collectively, cause the electronic device to identify a first voltage value of a voltage applied to the transmission line according to a current flowing from the input power source through a first resistor to the transmission line during the first time period.

4. The electronic device of claim 3,
wherein the recognition circuit comprises a second resistor connected in parallel with the first resistor and having a higher resistance value than the first resistor, and
wherein the one or more computer programs further include computer-executable instructions that, when executed by the one or more processors individually or collectively, cause the electronic device to:
identify a second voltage value of a voltage applied to the transmission line according to the current flowing through the second resistor to the transmission line during a second time period before or after the first time period, and
determine whether moisture has entered the connection terminal, based on the second voltage value.

5. The electronic device of claim 4, further comprising a pullup switch connected to the first resistor, turned on during the first time period to allow a current to flow to the first resistor by the input power source, and turned off during the second time period to prevent a current from flowing to the first resistor.

6. The electronic device of one of claims 1 to 5, further comprising a recognized circuit connected to the transmission line and comprising a variable resistor, and
wherein power of the external device is supplied to the recognized circuit when the external device is connected to the connection terminal.

7. The electronic device of one of claims 1 to 6, further comprising:
a charging circuit; and
a switching circuit for switching the one or more processors or the charging circuit to be connected to the transmission line.

8. The electronic device of one of claims 1 to 7, wherein the one or more computer programs further include computer-executable instructions that, when executed by the one or more processors individually or collectively, cause the electronic device to:
transmit data to the external device through the transmission line during a third time period, based on the identified first voltage value, when it is identified that the external device is connected to the connection terminal;
receive data transmitted from the external device through the transmission line during a fourth time period before or after the third time period; and
supply power from the charging circuit to the external device through the transmission line during the fifth time period that is before or after the third time period and the fourth time period.

9. The electronic device of one of claims 1 to 8, wherein the one or more computer programs further include computer-executable instructions that, when executed by the one or more processors individually or collectively, cause the electronic device to:
determine a channel to be used for data communication with the external device; and
control the recognition circuit so that a voltage corresponding to the determined channel is applied to the transmission line.

10. The electronic device of one of claims 1 to 9,
wherein the external device is an ear bud.

11. A method performed by an electronic device,
wherein the electronic device comprises:
a connection terminal configured to be connected to an external device;
a transmission line connected to the connection terminal and configured to transmit and receive power or data to and from an external device when connected to the external device; and
a recognition circuit connected to the transmission line and configured to output an electrical signal to the transmission line, and
wherein the method comprises:
outputting a first electrical signal from the recognition circuit to the transmission line during a first time period;
identifying a first voltage value of a voltage applied to the transmission line while the first electrical signal is output; and
determining whether the external device is connected to the connection terminal, based on the identified first voltage value.

12. The method of claim 11,
wherein the recognition circuit comprises a variable resistor, and
wherein the outputting of the first electrical signal comprises controlling the recognition circuit to have a first resistance value in order to output the first electrical signal to a transmission path.

13. The method of claim 11 or claim 12,
wherein the recognition circuit comprises:
an input power source; and
a first register connected to the input power source, and
wherein the identifying of the first voltage value of a voltage applied to the transmission line comprises identifying a first voltage value of a voltage applied to the transmission line according to a current flowing from the input power source through a first resistor to the transmission line during the first time period.

14. The method of claim 13,
wherein the recognition circuit comprises a second resistor connected in parallel with the first resistor and having a higher resistance value than the first resistor, and
wherein the method further comprises:
identifying a second voltage value of a voltage applied to the transmission line according to the current flowing through the second resistor to the transmission line during a second time period before or after the first time period; and
determining whether moisture has entered the connection terminal, based on the second voltage value.

15. The method of one of claims 11 to 14, further comprising at least one of:
transmitting data to the external device through the transmission line during a third time period, based on the identified first voltage value, when it is identified that the external device is connected to the connection terminal;
receiving data transmitted from the external device through the transmission line during a fourth time period before or after the third time period; or
supplying power from the charging circuit to the external device through the transmission line during the fifth time period that is before or after the third time period and the fourth time period.
